# EUROPÄISCHE PATENTSCHRIFT

(11) **EP 3 318 336 B1**
(45) Veröffentlichungstag und Bekanntmachung des Hinweises auf die Patenterteilung: **15.07.2020**
(21) Anmeldenummer: 17198760.5
(22) Anmeldetag: 27.10.2017
(51) Int. Cl.: B05B 15/40

(54) **FILTER-STRAHLRICHTEREINHEIT UND HOCHDRUCKDÜSENEINHEIT**
FILTER JET ALIGNER UNIT AND HIGH PRESSURE NOZZLE UNIT
UNITÉ DE REDRESSEUR DE JET À FILTRE ET UNITÉ DE BUSES HAUTE PRESSION

(30) Priorität: 07.11.2016 DE 102016221729
(43) Veröffentlichungstag der Anmeldung: 09.05.2018
(73) Patentinhaber: Lechler GmbH, 72555 Metzingen (DE)
(72) Erfinder: Foshag, Siegfried, 72649 Wolfschlugen (DE); Huber, Tobias, 72555 Metzingen (DE); Stein, Alfonso, 72766 Reutlingen (DE)
(74) Vertreter: Patentanwälte Ruff, Wilhelm, Beier, Dauster & Partner mbB

(56) Entgegenhaltungen:
- EP-A2- 1 078 692
- DE-A1-102009 019 255
- DE-B3-102015 214 123
- DE-U1- 29 706 863
- JP-A- 2011 115 749

## Beschreibung

Die Erfindung betrifft eine Filter-Strahlrichtereinheit, insbesondere für eine Hochdruckdüse, insbesondere zum Entzundern von Metallerzeugnissen, mit einem Gehäuse, wobei das Gehäuse einen Eintrittsfilter, ein Anschlussende zur Verbindung mit einer Düse, einen Strömungskanal zwischen dem Eintrittsfilter und dem Anschlussende und einen Strahlrichter mit Strömungsleitflächen im Strömungskanal aufweist. Die Erfindung betrifft auch eine Hochdruckdüseneinheit mit einer erfindungsgemäßen Filter-Strahlrichtereinheit.

Aus der europäischen Patentschrift EP 1 992 415 B1 ist eine Hochdruckdüse zum Entzundern von Stahlerzeugnissen bekannt, die ein Gehäuse mit einem Eintrittsfilter, einem Düsenmundstück mit einer Austrittsöffnung, einem Strömungskanal zwischen dem Eintrittsfilter und der Austrittsöffnung im Düsenmundstück und einem Strahlrichter mit Strömungsleitflächen im Strömungskanal aufweist. Der Eintrittsfilter ist durch ein zylindrisches Rohrstück gebildet, das mit parallel zur Mittellängsachse des Rohrstücks verlaufenden Schlitzen versehen ist. Das zylindrische Rohrstück wird durch eine etwa halbkugelförmige Filterkappe abgeschlossen, die ebenfalls mit Schlitzen versehen ist. Stromabwärts des Eintrittsfilters ist ein Strahlrichter angeordnet, der mehrere, radial zu einer Mittellängsachse des Strömungskanals durch das Gehäuse angeordnete Strömungsleitflächen aufweist. An ihrem radial inneren Ende sind die Strömungsleitflächen nicht miteinander verbunden und bilden dadurch einen seelenlosen Strahlrichter.

Aus der US-Offenlegungsschrift US 2005/0156064 A1 ist eine weitere Hochdruckdüse zum Entzundern von Stahlerzeugnissen bekannt. Die Hochdruckdüse weist ein Gehäuse mit einem Eintrittsfilter, einem Düsenmundstück mit einer Austrittsöffnung, einen Strömungskanal zwischen dem Eintrittsfilter und der Austrittsöffnung im Düsenmundstück und einen Strahlrichter mit Strömungsleitflächen im Strömungskanal auf. Der Eintrittsfilter ist als einseitig abgeschlossenes zylindrisches Rohr ausgebildet, wobei in der Umfangswand des zylindrischen Rohrs und in dem scheibenförmigen Abschluss des zylindrischen Rohrs Schlitze angeordnet sind. Stromabwärts des Eintrittsfilters ist ein Strahlrichter im Strömungskanal angeordnet, der mehrere, sich in radialer Richtung erstreckende Strömungsleitflächen aufweist. An den radial innenliegenden Kanten der Strömungsleitflächen ist koaxial zum Strömungskanal ein Stromlinienkörper angeordnet, mit dem die Strömungsleitflächen verbunden sind. Der Stromlinienkörper weist an seinem stromaufwärts und stromabwärts gelegenen Ende jeweils eine kegelförmige Spitze auf. Die am stromaufwärts gelegenen Ende angeordnete kegelförmige Spitze erstreckt sich bis in den Bereich des Eintrittsfilters. An der Basis der kegelförmigen Spitze, die stromabwärts des Eintrittsfilters angeordnet ist, beginnen die Strömungsleitflächen. In gleicher Weise ist die am stromabwärts gelegenen Ende angeordnete kegelförmige Spitze so angeordnet, dass ihre Basis am stromabwärts gelegenen Ende der Strömungsleitflächen angeordnet ist.

Eine weitere Hochdruckdüse zum Entzundern von Stahlerzeugnissen ist aus dem deutschen Gebrauchsmuster DE 91 09 175 U1 bekannt. Auch dort ist ein Gehäuse mit einem Eintrittsfilter, einem Düsenmundstück mit einer Austrittsöffnung, einem Strömungskanal zwischen dem Eintrittsfilter und der Austrittsöffnung im Düsenmundstück und einem Strahlrichter mit Strömungsleitflächen im Strömungskanal vorgesehen. Der Strahlrichter ist stromabwärts des Eintrittsfilters angeordnet.

Aus dem deutschen Gebrauchsmuster DE 297 06 863 U1 ist eine weitere Hochdruckdüse zum Entzundern von Stahlerzeugnissen mit einem Eintrittsfilter und einem stromabwärts des Eintrittsfilters angeordneten Strahlrichter im Strömungskanal bekannt.

Die japanische Patentzusammenfassung JP 2011-115749 A beschreibt eine weitere Hochdruckdüse zum Entzundern von Stahlerzeugnissen.

Eine weitere Hochdruckdüse zum Entzundern von Stahlerzeugnissen ist aus der deutschen Offenlegungsschrift DE 10 2009 019 255 A1 bekannt. Die Düse weist ein Gehäuse mit einem Eintrittsfilter, einem Düsenmundstück mit einer Austrittsöffnung, einem Strömungskanal zwischen dem Eintrittsfilter und der Austrittsöffnung im Düsenmundstück und einem Strahlrichter mit Strömungsleitflächen im Strömungskanal auf. Der Strahlrichter ist in zwei Abschnitte unterteilt, wobei die Strömungsleitflächen im ersten und im zweiten Abschnitt in Umfangsrichtung gegeneinander versetzt sind. Zwischen den beiden Abschnitten ist ein Ringraum angeordnet, in dem keine Strömungsleitflächen vorgesehen sind.

Aus der deutschen Patentschrift DE 10 2014 112 757 B4 ist eine Flachstrahldüse mit einem Düsenmundstück mit einer Austrittsöffnung und einer Austrittskammer bekannt, wobei ein Strahlrichter unmittelbar stromaufwärts der Austrittskammer angeordnet ist. Der Strahlrichter ist als Scheibe ausgebildet und weist eine zentrale Durchgangsöffnung sowie sternförmig um die zentrale Durchgangsöffnung angeordnete etwa dreieckförmige oder kreissektorförmige Durchgangsöffnungen auf. Die Dicke der Strahlrichterscheibe soll zwischen 1 mm und 4 mm liegen.

Aus der deutschen Patentschrift DE 10 2015 214 123 B3 ist eine Filter-Strahlrichtereinheit für eine Hochdruckdüse mit einem Gehäuse bekannt, wobei das Gehäuse einen Eintrittsfilter, ein Anschlussende zur Verbindung mit einer Düse und einen Strömungskanal zwischen dem Eintrittsfilter und dem Anschlussende aufweist. Der Eintrittsfilter weist eingesägte Schlitze auf. Die Seitenflächen der Schlitze haben möglicherweise eine gewisse Richtwirkung auf die eintretende Strömung.

Aus der japanischen Offenlegungsschrift JP 2011-115749 A ist ein Strahlrichter für eine Hochdruckdüse bekannt, der stromabwärts des Eintrittsfilters angeordnet wird.

Aus dem deutschen Gebrauchsmuster DE 297 06 863 U1 ist eine Hochdruck-Düse mit Strahlrichter bekannt, wobei der Strahlrichter stromabwärts des Eintrittsfilters angeordnet ist.

Aus der europäischen Offenlegungsschrift EP 1 078 692 A2 ist ein Strahlrichter für eine Handbrause bekannt.

Aus der deutschen Offenlegungsschrift DE 10 2009 019 255 A1 ist eine Hochdruckdüse mit einem Strahlrichter im Strömungskanal bekannt. Der Strahlrichter ist stromabwärts eines Eintrittsfilters angeordnet.

Mit der Erfindung sollen eine Filter-Strahlrichtereinheit und eine Hochdruckdüseneinheit in Bezug auf einen Strömungswiderstand und eine Stabilität des Eintrittsfilters verbessert werden.

Erfindungsgemäß sind hierzu eine Filter-Strahlrichtereinheit mit den Merkmalen von Anspruch 1 und eine Hochdruckdüseneinheit mit den Merkmalen von Anspruch 13 vorgesehen. Zweckmäßige Weiterbildungen der Erfindung sind in den Unteransprüchen angegeben.

Erfindungsgemäß ist eine Filter-Strahlrichtereinheit, insbesondere für eine Hochdruckdüse, insbesondere zum Entzundern von Metallerzeugnissen, mit einem Gehäuse vorgesehen, wobei das Gehäuse einen Eintrittsfilter, ein Anschlussende zur Verbindungmit einer Düse, einen Strömungskanal zwischen dem Eintrittsfilter und dem Anschlussende und einen Strahlrichter mit Strömungsleitflächen im Strömungskanal aufweist, wobei die Strömungsleitflächen des Strahlrichters wenigstens abschnittsweise im Bereich des Eintrittsfilters angeordnet sind.

Die Anordnung der Strömungsleitflächen wenigstens abschnittsweise im Bereich des Eintrittsfilters verursacht überraschenderweise eine Beruhigung der Strömung im Strömungskanal und dadurch einen verbesserten Impact der mit der Filter-Strahlrichtereinheit versehenen Hochdruckdüse, also im Betrieb der Düse eine höhere Energie des Sprühstrahls beim Auftreffen auf eine Oberfläche. Es wird angenommen, dass die wenigstens abschnittsweise Anordnung der Strömungsleitflächen im Bereich des Eintrittsfilters dafür sorgt, dass Turbulenzen im Bereich des Eintrittsfilters gar nicht erst entstehen können oder schneller abgebaut werden, wodurch sich der Strömungswiderstand des Strömungskanals insgesamt verringert. Die erfindungsgemäßen Hochdruckdüsen sind zum Versprühen von Flüssigkeiten mit Drücken von mindestens 50 bar, insbesondere mehreren hundert bar, speziell bis 800 bar, vorgesehen sind.

In Weiterbildung der Erfindung weist der Eintrittsfilter mehrere, parallel zur Mittellängsachse des Strömungskanals angeordnete Eintrittsschlitze auf, wobei die Eintrittsschlitze mittels mehrerer in Umfangsrichtung des Gehäuses gesehen nebeneinander angeordneter Stege voneinander getrennt sind, wobei die Strömungsleitflächen des Strahlrichters wenigstens teilweise mit den Innenseiten der Stege verbunden sind, die einem Innenraum des Gehäuses zugewandt sind.

Indem die Strömungsleitflächen wenigstens teilweise mit den Innenseiten der Stege verbunden werden, kann eine erhebliche Stabilisierung der Stege und damit des gesamten Eintrittsfilters erreicht werden. In den Zuführleitungen zu Hochdruckdüsen können Druckwellen bzw. Druckstöße auftreten, die vermutlich durch das Öffnen der Wasserzufuhr entstehen. Solche Druckstöße in der Zuführleitung gelangen bis zum Eintrittsfilter und können den Eintrittsfilter beschädigen, indem beispielsweise die Stege zwischen den Schlitzen des Eintrittsfilters nach innen in den Strömungskanal hineingedrückt werden. Wenn dies auftritt, verringert sich dadurch der freie Querschnitt des Eintrittsfilters und die Filter- und Strahlrichtereinheit muss ausgetauscht werden. Mittels einer Verbindung der Strömungsleitflächen mit der Innenseite der Stege können die Stege so weit stabilisiert werden, dass kein Eindrücken bei Druckstößen mehr zu befürchten ist. Darüber hinaus sorgt eine Verbindung der Strömungsleitflächen mit den Innenseiten der Stege für eine Trennung der Strömungen durch die einzelnen Eintrittsschlitze. Es hat sich herausgestellt, dass durch diese Maßnahmen Turbulenzen stromabwärts der Eintrittsschlitze des Eintrittsfilters verhindert bzw. verringert werden können, so dass der Strömungswiderstand des Strömungskanals durch das Gehäuse verringert wird.

In Weiterbildung der Erfindung sind die Strömungsleitflächen an ihrer radial innenliegenden Seite wenigstens abschnittsweise miteinander oder mit einem zentralen Verbindungselement des Strahlrichters verbunden.

In mechanischer Hinsicht können sich die radial innenliegenden Seiten bzw. Kanten der Strömungsleitflächen dann gegeneinander oder an dem zentralen Verbindungselement abstützen, wodurch eine erhebliche Stabilisierung des Eintrittsfilters erzielt wird. Darüber hinaus werden die zwischen den einzelnen Strömungsleitflächen liegenden Strömungskanäle gegeneinander getrennt, wodurch Turbulenzen vermieden und/oder schneller abgebaut werden und der Strömungswiderstand verringert werden kann.

In Weiterbildung der Erfindung erstreckt sich das zentrale Verbindungselement lediglich über einen Teil der Länge des Strahlrichters und die Strömungsleitflächen am stromabwärts gelegenen Ende des Strahlrichters berühren sich auf ihren radial innenliegenden Seiten nicht. Auf diese Weise kann der freie Strömungsquerschnitt über die Länge des Strahlrichters gesehen vergrößert werden, da sich der freie Querschnitt mit dem Abschluss bzw. dem Ende des zentralen Verbindungselements erhöht. Die Strömungsleitflächen können dennoch weitergeführt werden und sich beispielsweise in Strömungsrichtung gesehen bis zum Ende des Strahlrichters verjüngen.

In Weiterbildung der Erfindung ist das zentrale Verbindungselement als Rohr ausgebildet und bildet einen zentralen Einlaufkanal oder Teilströmungskanal des Strahlrichters.

Mittels des zentralen Rohrs kann dadurch ein weiterer, separater Strömungskanal durch den Strahlrichter bzw. durch einen Abschnitt des Strahlrichters hindurch bereitgestellt werden. Auch diese Maßnahme trägt zu einer Verringerung des Strömungswiderstands bei.

In Weiterbildung der Erfindung verringert sich ein freier Querschnitt des zentralen Teilströmungskanals, insbesondere des Rohrs, in Strömungsrichtung.

In Weiterbildung der Erfindung verläuft die Innenwand des zentralen Teilströmungskanals, insbesondere des Rohrs, am stromabwärts gelegenen Ende des Strahlrichters parallel zu einer Mittellängsachse des Gehäuses.

In Weiterbildung der Erfindung erstrecken sich die Strömungsleitflächen des Strahlrichters über die gesamte Länge des Eintrittsfilters.

Auf diese Weise kann der Eintrittsfilter bzw. die Stege zwischen den Schlitzen des Eintrittsfilters auf der gesamten Länge des Eintrittsfilters mittels der Strömungsleitflächen stabilisiert werden. Darüber hinaus können über die gesamte Länge des Eintrittsfilters voneinander getrennte Strömungskanäle bereitgestellt werden. Beispielsweise ist jedem Eintrittsschlitz an der zylindrischen Umfangswand des Eintrittsfilters ein separater Strömungskanal zugeordnet und allen Eintrittsschlitzen in der Filterkappe, die den zylindrischen Abschnitt des Eintrittsfilters am stromaufwärts gelegenen Ende abschließt, ist ein gemeinsamer Strömungskanal zugeordnet. Durch diese Maßnahmen lassen sich Turbulenzen im Eintrittsfilter verringern oder vermeiden und der Strömungswiderstand wird verringert.

In Weiterbildung der Erfindung weist der Eintrittsfilter mehrere, an einer zylindrischen Umfangswand des Gehäuses angeordnete Eintrittsschlitze auf und ausgehend von diesen Eintrittsschlitzen sind mehrere voneinander getrennte Einlaufkanäle oder mehrere voneinander getrennte äußere Teilströmungskanäle im Strahlrichter vorgesehen. Die Teilströmungskanäle können sich bis zum Ende des Strahlrichters erstrecken.

Auf diese Weise können Turbulenzen, die durch das Aufeinandertreffen von Wasser, das durch unterschiedliche Eintrittsschlitze eintritt, verursacht werden, vollständig vermieden werden. Mittels des Strahlrichters kann das durch die verschiedenen Eintrittsschlitze eintretende Wasser dann parallel zueinander ausgerichtet werden, so dass die einzelnen Wasserströmungen dann stromabwärts des Strahlrichters gleichgerichtet aufeinandertreffen und Turbulenzen verringert oder vermieden werden.

In Weiterbildung der Erfindung ist jeweils zwei Eintrittsschlitzen oder jedem Eintrittsschlitz ein getrennter Einlaufkanal oder getrennter äußerer Teilströmungskanal zugeordnet.

In Weiterbildung der Erfindung sind ein zentraler Einlaufkanal oder zentraler Teilströmungskanal des Strahlrichters und mehrere, den zentralen Teilströmungskanal umgebende äußere Einlaufkanäle oder äußere Teilströmungskanäle vorgesehen.

In Weiterbildung der Erfindung ist am stromaufwärts gelegenen Ende des zentralen Einlaufkanals eine Filterkappe des Eintrittsfilters angeordnet.

In Weiterbildung der Erfindung weist die Filterkappe mehrere Eintrittsschlitze auf, wobei von zwischen den Eintrittsschlitzen angeordneten Stegen wenigstens teilweise Strömungsleitflächen des Strahlrichters ausgehen.

Auf diese Weise kann der Eintrittsfilter mittels der Strömungsleitflächen bis in den Bereich der Filterkappe stabilisiert werden.

In Weiterbildung der Erfindung sind die Strömungsleitflächen mit den Innenseiten der Stege verbunden.

In Weiterbildung der Erfindung verringert sich eine Fläche der Strömungsleitflächen in Strömungsrichtung gesehen und die Strömungsleitflächen am stromabwärts gelegenen Ende des Strahlrichters enden an einer gemeinsamen Spitze.

Eine gemeinsame Spitze kann einen Stromlinienkörper bilden, der dann durch die zusammenlaufenden Strömungsleitflächen gebildet ist. Durch die Verringerung der Fläche der Strömungsleitflächen in Strömungsrichtung kann der Strömungswiderstand über die Länge des Strahlrichters gesehen verringert werden, ohne dass bei der Ausrichtwirkung des Strahlrichters Abstriche gemacht werden müssen.

In Weiterbildung der Erfindung sind die Filterkappe und der durch die Strömungsleitflächen gebildete Strahlrichter einstückig ausgebildet.

Beispielsweise können die Filterkappe und der Strahlrichter mittels Herstellen eines Grünlings durch Metallpulverspritzgießen und anschließendem Sintern einstückig hergestellt werden. Beispielsweise können auch mehrere Einzelteile zusammengesintert werden, um ein hochfestes, einstückiges Teil herzustellen. Auch die Herstellung von Einzelteilen mittels Druckguss ist möglich, abhängig von der Größe und/oder dem vorgesehenen Werkstoff. Darüber hinaus ist auch eine spanende Herstellung möglich.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine schematische Schnittansicht einer erfindungsgemäßen Hochdruckdüseneinheit,
- Fig. 2: eine Seitenansicht einer Filter-Strahlrichtereinheit der Hochdruckdüseneinheit der Fig. 1,
- Fig. 3: eine Ansicht der Filter-Strahlrichtereinheit der Fig. 2 von unten, entgegen einer vorgesehenen Strömungsrichtung,
- Fig. 4: eine Ansicht der Filter-Strahlrichtereinheit der Fig. 2 von schräg unten,
- Fig. 5: eine weitere Ansicht der Filter-Strahlrichtereinheit der Fig. 2 von schräg unten aus einem anderen Blickwinkel,
- Fig. 6: eine Ansicht auf die Schnittebene C-C in Fig. 5,
- Fig. 7: eine Seitenansicht der längsgeschnittenen Filter-Strahlrichtereinheit der Fig. 2,
- Fig. 8: eine Ansicht der längsgeschnittenen Filter-Strahlrichtereinheit der Fig. 7 von unten, entgegen der vorgesehenen Strömungsrichtung,
- Fig. 9: eine Ansicht der längsgeschnittenen Filter-Strahlrichtereinheit der Fig. 7 von schräg oben,
- Fig. 10: eine weitere Ansicht der längsgeschnittenen Filter-Strahlrichtereinheit der Fig. 7 von schräg unten aus einem anderen Blickwinkel,
- Fig. 11: eine Filter-Strahlrichtereinheit gemäß einer weiteren Ausführungsform der Erfindung von schräg unten,
- Fig. 12: die Filter-Strahlrichtereinheit der Fig. 11 aus einem anderen Blickwinkel,
- Fig. 13: eine Ansicht der Filter-Strahlrichtereinheit der Fig. 11 von unten, entgegen der vorgesehenen Strömungsrichtung durch die Filter-Strahlrichtereinheit,
- Fig. 14: eine Seitenansicht der Filter-Strahlrichtereinheit der Fig. 11,
- Fig. 15: eine Ansicht der Filter-Strahlrichtereinheit der Fig. 11 von oben,
- Fig. 16: eine Ansicht auf die Schnittebene A-A in Fig. 14,
- Fig. 17: eine Ansicht eines Teils der Filter-Strahlrichtereinheit der Fig. 11 bis 16 von schräg oben,
- Fig. 18: eine Ansicht des Teils der Filter-Strahlrichtereinheit der Fig. 17 von schräg unten,
- Fig. 19: eine Ansicht des Teils der Filter-Strahlrichtereinheit aus Fig. 17 von unten,
- Fig. 20: eine Ansicht des Teils der Strahlrichtereinheit der Fig. 17 von der Seite,
- Fig. 21: die Ansicht des Teils der Filter-Strahlrichtereinheit der Fig. 17 von oben,
- Fig. 22: eine Ansicht auf die Schnittebene A-A der Fig. 20,
- Fig. 23: eine Ansicht einer Filterkappe für die Filter-Strahlrichtereinheit der Fig. 11 von schräg unten,
- Fig. 24: die Filterkappe der Fig. 23 von schräg oben,
- Fig. 25: die Filterkappe der Fig. 23 von unten,
- Fig. 26: die Filterkappe der Fig. 23 von der Seite,
- Fig. 27: die Filterkappe der Fig. 23 von oben,
- Fig. 28: eine schematische Schnittansicht einer weiteren erfindungsgemäßen Hochdruckdüseneinheit,
- Fig. 29: eine Filter-Strahlrichtereinheit für die Hochdruckdüseneinheit der Fig. 28 von schräg unten,
- Fig. 30: eine Ansicht der Filter-Strahlrichtereinheit der Fig. 29 von unten,
- Fig. 31: eine Ansicht der Filter-Strahlrichtereinheit der Fig. 29 von der Seite,
- Fig. 32: eine Ansicht der Filter-Strahlrichtereinheit der Fig. 29 von oben,
- Fig. 33: eine Ansicht auf die Schnittebene B-B in Fig. 31,
- Fig. 34: eine Ansicht einer Filterkappe der Filter-Strahlrichtereinheit der Fig. 29 von schräg unten,
- Fig. 35: die Filterkappe der Fig. 34 von schräg oben,
- Fig. 36: die Filterkappe der Fig. 34 von unten,
- Fig. 37: die Filterkappe der Fig. 34 von der Seite,
- Fig. 38: die Filterkappe der Fig. 34 von oben,
- Fig. 39: eine Seitenansicht einer Filter-Strahlrichtereinheit gemäß einer weiteren Ausführungsform der Erfindung,
- Fig. 40: eine Ansicht der Filter-Strahlrichtereinheit der Fig. 39 von unten, entgegen der im Betrieb vorgesehenen Strömungsrichtung,
- Fig. 41: eine Ansicht der Filter-Strahlrichtereinheit der Fig. 39 von oben,
- Fig. 42: eine Ansicht auf die Schnittebene A-A in Fig. 39 und
- Fig. 43: eine Ansicht auf die Schnittebene B-B in Fig. 42,
- Fig. 44: eine Ansicht einer Filter-Strahlrichtereinheit gemäß einer weiteren Ausführungsform der Erfindung und
- Fig. 45: eine Ansicht auf die Schnittebene A-A in Fig. 44.

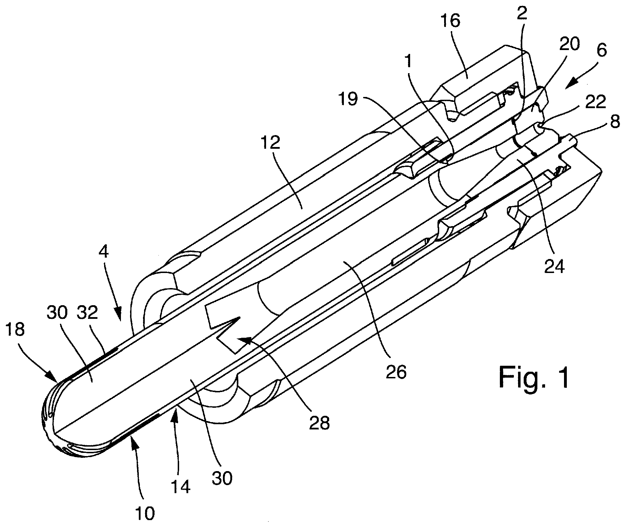

Die Darstellung der Fig. 1 zeigt eine schematische Schnittansicht einer erfindungsgemäßen Hochdruckdüseneinheit 4. Die Hochdruckdüseneinheit 4 ist in einen Anschweißnippel 12 eingebaut, der dafür vorgesehen ist, in eine Öffnung einer nicht dargestellten wasserführenden Rohrleitung eingesetzt und mit dieser verschweißt zu werden. Die Hochdruckdüseneinheit 4 weist eine Filter-Strahlrichtereinheit 10 und eine Düse 6 auf. Die Düse 6 weist ein Düsengehäuse 8,eine Verbindungshülse 24, ein Mundstück 20 und eine Austrittsöffnung 22 auf. Ein Gehäuse 14 der Filter-Strahlrichtereinheit 10 ist mit der Verbindungshülse 24 im Bereich 1 verbunden und die Verbindungshülse 24 ist mit dem Mundstück 20 im Bereich 2 verbunden. Das Gehäuse 14 ist in das Düsengehäuse 8 eingeschraubt, das mittels einer Überwurfmutter 16 an dem Anschweißnippel 12 befestigt ist.

Das Gehäuse 14 weist einen Eintrittsfilter 18 und ein Anschlussende 19 auf, das an der Verbindungshülse 24 anstößt und gegebenenfalls mit dieser verbunden ist. Zwischen dem Eintrittsfilter 18 und dem Anschlussende 19 und dann weiter zu der Austrittsöffnung 22 verläuft ein Strömungskanal 26. In dem Strömungskanal ist ein Strahlrichter 28 angeordnet, der mehrere Strömungsleitflächen 30 aufweist. Die Strömungsleitflächen 30 des Strahlrichters 28 erstrecken sich, wie Fig. 1 zu entnehmen ist, über die gesamte Länge des Eintrittsfilters 18 und noch ein Stück darüber hinaus. Die Länge des Eintrittsfilters 18 ist dabei durch das stromabwärts gelegene Ende von Schlitzen 32 gebildet, die den Eintritt von Wasser in den Strömungskanal 26 ermöglichen. Die Hochdruckdüseneinheit 4 ist zum Entzundern von Metallerzeugnissen vorgesehen und wird mit Wasser mit einem Druck zwischen etwa 50 bar und 800 bar beaufschlagt.

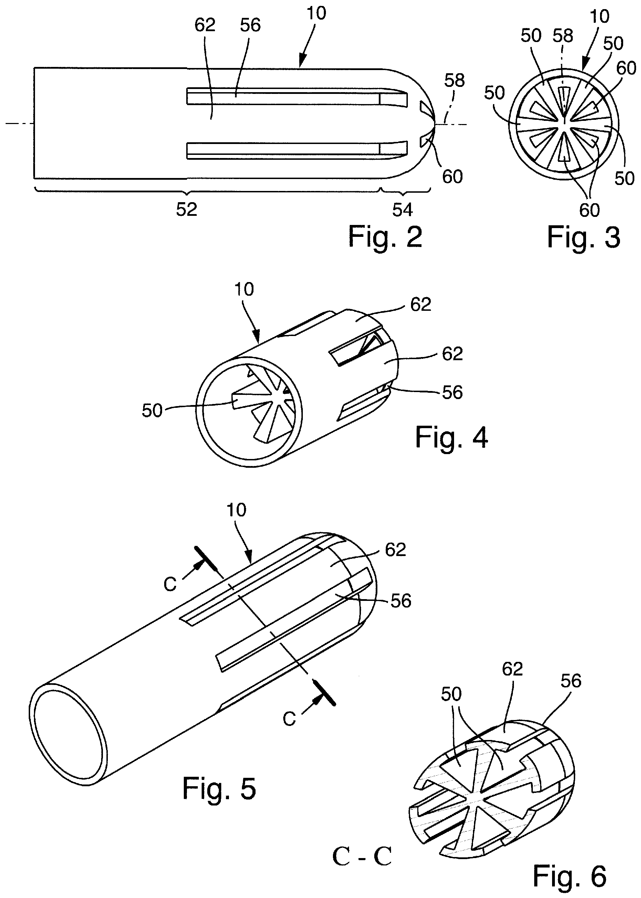

Die Darstellung der Fig. 2 zeigt eine Seitenansicht der Filter-Strahlrichtereinheit 10 der Hochdruckdüseneinheit 4 der Fig. 1. Die Filter-Strahlrichtereinheit 10 weist einen zylindrischen Rohrabschnitt 52 und eine an den zylindrischen Rohrabschnitt angesetzte etwa halbkugelförmige Filterkappe 54 auf. Die Filter-Strahlrichtereinheit 10 weist im zylindrischen Abschnitt mehrere Eintrittsschlitze 56 auf, die sich parallel zu einer Mittellängsachse 58 des Eintrittsfilters 18 erstrecken. Die Eintrittsschlitze 56 sind darüber hinaus in radialer Richtung zur Mittellängsachse 58 angeordnet und erstrecken sich ein Stück weit in die Filterkappe 54 hinein. Alternativ können die Eintrittsschlitze 56 vor der Filterkappe 54 enden. Die Filterkappe 54 weist ebenfalls Eintrittsschlitze 60 auf, die in radialer Richtung auf den Durchstoßpunkt der Mittellängsachse 58 durch die Filterkappe 54 zu laufen.

Die Darstellung der Fig. 3 zeigt eine Ansicht der Filter-Strahlrichtereinheit 10 von unten gegen die im Betrieb vorgesehene Strömungsrichtung, also in Fig. 2 von links her. In dieser Ansicht sind die Schlitze 60 in der Filterkappe sowie insgesamt sechs Strömungsleitflächen 50 zu erkennen. Die Strömungsleitflächen 50 sind mit der Innenseite von Stegen 62 verbunden, siehe Fig. 2, die zwischen zwei Eintrittsschlitzen 56 liegen. Mit ihren radial innenliegenden Kanten sind die Strömungsleitflächen 50 miteinander verbunden. Alle sechs Strömungsleitflächen 50 laufen somit im Bereich der Mittellängsachse 58 zusammen und sind dort miteinander verbunden.

Die Darstellung der Fig. 4 zeigt die Filter-Strahlrichtereinheit 10 der Fig. 2 in einer Ansicht von schräg unten. In dieser Ansicht sind die Strömungsleitflächen 50 des Strahlrichters gut zu erkennen, die innerhalb der Filter-Strahlrichtereinheit 10 angeordnet sind.

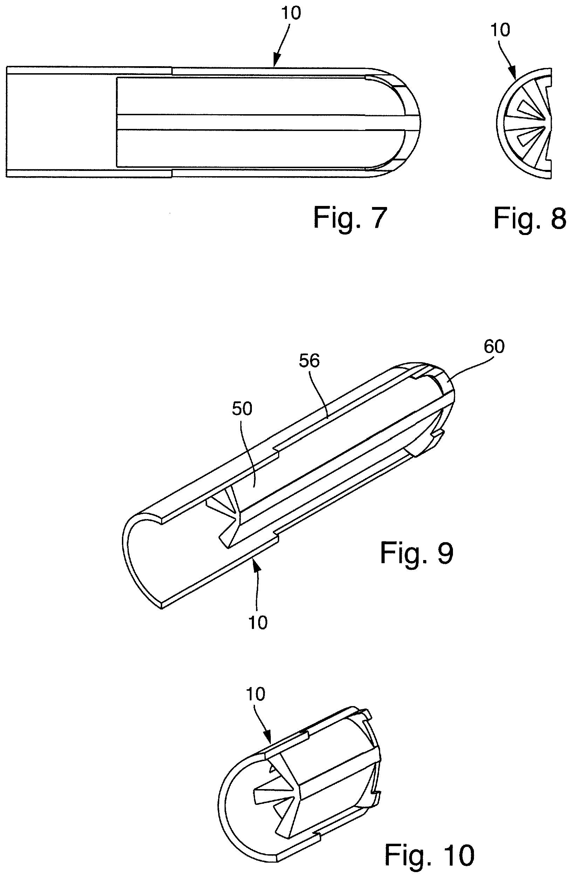

Fig. 5 zeigt eine weitere Ansicht der Filter-Strahlrichtereinheit 10 von schräg unten und Fig. 6 zeigt eine Ansicht auf die Schnittebene C-C in Fig. 5. In Fig. 6 ist gut zu erkennen, dass die Strömungsleitflächen 50 mit der Innenseite der Stege 62 verbunden sind. Bei der Ausführungsform der Fig. 6 sind die Strömungsleitflächen 50 einstückig mit den Stegen 62 ausgeführt. Im Rahmen der Erfindung ist eine mehrteilige Ausführung möglich und beispielsweise können die Strahlrichter mit den Strömungsleitflächen in den Filter eingepresst werden. Auf ihrer radial innenliegenden Seite sind die Strömungsleitflächen 50 miteinander verbunden. Es ist in Fig. 8 dadurch gut zu erkennen, dass die Stege 62 durch die Strömungsleitflächen 50 stabilisiert werden. Speziell ist ein Eindrücken der Stege 62 bei Auftreten von Druckstößen im zugeführten Wasser nicht mehr zu befürchten. Denn solche radial nach innen wirkenden Kräfte auf die Stege 62 werden von den Strömungsleitflächen 50 übernommen und abgeleitet.

Darüber hinaus ist zu erkennen, dass zwischen zwei Strömungsleitflächen 50 jeweils ein im Querschnitt kreissektorartiger und angenähert etwa dreieckförmiger Teilströmungskanal gebildet ist, der bis zum Ende des Strahlrichters und somit bis zum stromabwärts gelegenen Ende der Strömungsleitflächen 50 durchläuft. Jedem dieser im Querschnitt etwa dreieckförmigen Teilströmungskanäle ist ein Eintrittsschlitz 56 und ein Eintrittsschlitz 60 zugeordnet. Die Anzahl der Eintrittsschlitze 56 und die Anzahl der Eintrittsschlitze 60 kann unterschiedlich sein. Beispielsweise ist jedem Teilströmungskanal ein Eintrittsschlitz 56 zugeordnet und jedem zweiten Teilströmungskanal ist zusätzlich noch ein Eintrittsschlitz 60 zugeordnet. Wasser, das durch den jeweiligen Eintrittsschlitze 56 und 60 eintritt, wird infolgedessen innerhalb des zugeordneten Teilströmungskanals zwischen zwei benachbarten Strömungsleitflächen 50 parallel zur Mittellängsachse ausgerichtet und verlässt dann bereits im ausgerichteten Zustand den Strahlrichter. Die einzelnen Wasserströmungen durch die Eintrittsschlitze 56 und 60 treffen dadurch erst im ausgerichteten Zustand aufeinander. Dadurch lässt sich der Strömungswiderstand des Eintrittsfilters 18 gegenüber konventionellen Eintrittsfiltern deutlich verringern. Im Ergebnis wird bei der Hochdruckdüseneinheit 4 der Fig. 1 mit der Filter-Strahlrichtereinheit 10 ein höherer Impact eines Sprühstrahls gegenüber konventionellen Hochdruckdüsen erzielt.

Die Fig. 7 bis 10 zeigen verschiedene Ansichten der Filter-Strahlrichtereinheit 10 der Fig. 2, wobei die Filter-Strahlrichtereinheit 10 in den Darstellungen der Fig. 7 bis 10 aufgeschnitten und nur zur Hälfte dargestellt ist.

In Fig. 9 ist zu erkennen, dass bei dieser Ausführungsform den im Querschnitt etwa dreieckförmigen Teilströmungskanälen zwischen zwei Strömungsleitflächen 50 jeweils einer der Eintrittsschlitze 56 im zylindrischen Abschnitt des Eintrittsfilters 18 und jeweils einer der Eintrittsschlitze 60 im domförmigen Bereich der Filterkappe des Eintrittsfilters 18 zugeordnet ist.

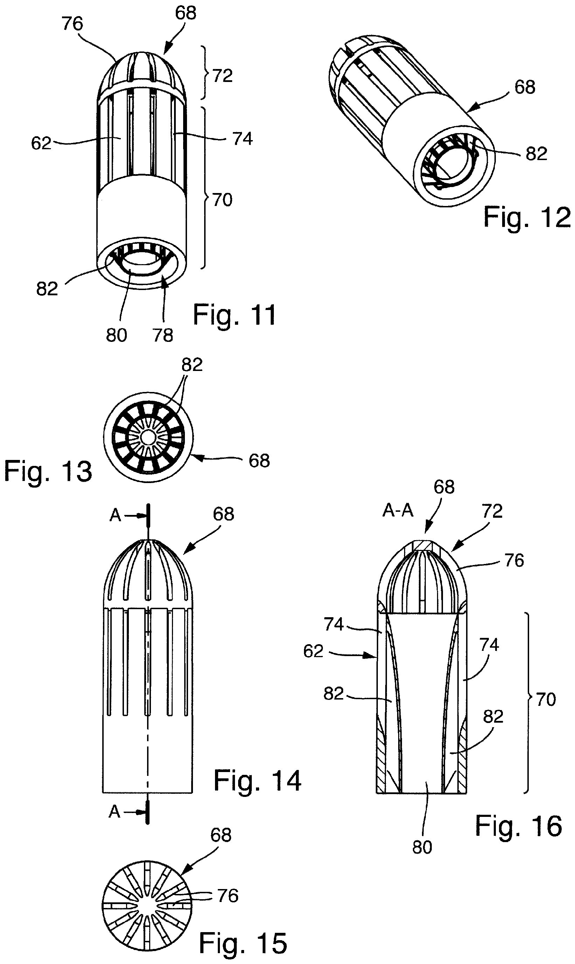

Die Darstellung der Fig. 11 zeigt eine Filter-Strahlrichtereinheit 68 für eine weitere erfindungsgemäße Hochdruckdüseneinheit. Die Filter-Strahlrichtereinheit 68 weist einen zylindrischen Abschnitt 70 und eine an den zylindrischen Abschnitt 70 angesetzte etwa halbkugelartige Filterkappe 72 auf. In dem zylindrischen Abschnitt 70 sind mehrere Eintrittsschlitze 74 über den Umfang verteilt angeordnet, die parallel zu einer Mittellängsachse der Filter-Strahlrichtereinheit 68 verlaufen. Auch in der Filterkappe 72 sind über den Umfang verteilt mehrere Eintrittsschlitze 76 angeordnet, die fluchtend zu den Eintrittsschlitzen 74 angeordnet sind und auf einen Durchstoßpunkt der Mittellängsachse durch die Filterkappe 72 zulaufen. Wie ausgeführt wurde ist eine fluchtende Anordnung der Eintrittsschlitze 74 und der Eintrittsschlitze 76 in der Filterkappe 72 im Rahmen der Erfindung nicht erforderlich. Die Anzahl der Eintrittsschlitze 74 im zylindrischen Rohrabschnitt 70 kann von der Anzahl der Eintrittsschlitze 76 in der Filterkappe 72 abweichen und beispielsweise können in der Filterkappe 72 neun Eintrittsschlitze 76 und im zylindrischen Rohrabschnitt 70 zwölf bis vierzehn Eintrittsschlitze 74 vorgesehen sein.

Innerhalb des zylindrischen Abschnitts 70 der Filter-Strahlrichtereinheit 68 ist ein Strahlrichter 78 angeordnet. Der Strahlrichter 78 weist ein zentrales Führungsrohr 80 auf, das konzentrisch zur Mittellängsachse angeordnet ist und das einen zentralen Teilströmungskanal bildet. Mit einer Außenseite des zentralen Führungsrohrs 80 sind mehrere Strömungsleitflächen 82 verbunden. Zwischen zwei Strömungsleitflächen 82 ist jeweils ein separater Teilströmungskanal gebildet. Die Strömungsleitflächen 82 sind jeweils mit der Innenseite von Stegen 62 verbunden, wobei jeweils ein Steg 62 zwischen zwei Eintrittsschlitzen 74 angeordnet ist. Jedem Eintrittsschlitz 74 ist somit ein separater Teilströmungskanal zwischen zwei Strömungsleitflächen 82 zugeordnet.

Die Anordnung der Strömungsleitflächen 82 und der Schlitze 74 ist gut der Schnittansicht der Fig. 16 zu entnehmen. Es ist zu erkennen, dass Wasser, das durch einen Eintrittsschlitz 74 eintritt, separat in einem Teilströmungskanal zwischen zwei Strömungsleitflächen 82 geführt wird und mit Wasser, das durch die Filterkappe 72 und dann in das zentrale Führungsrohr 80 oder durch einen anderen Eintrittsschlitz 74 eintritt, erst am stromabwärts gelegenen Ende des Strahlrichters im Eintrittsfilter 68 vermischt wird.

Insgesamt sind zwölf bei der dargestellten Ausführungsform radial angeordnete Strömungsleitflächen 82 und zwölf Eintrittsschlitze 74 im zylindrischen Teil 70 des Eintrittsfilters 68 vorgesehen. In der Filterkappe 72 sind ebenfalls zwölf Eintrittsschlitze 76 vorgesehen.

Durch die Eintrittsschlitze 76 in der Filterkappe 72 tritt, wie erwähnt wurde, Wasser in den Innenraum der Filterkappe 72 ein und gelangt dann in das zentrale Führungsrohr 80. Das zentrale Führungsrohr 80 beginnt am stromaufwärts gelegenen Ende des zylindrischen Abschnitts 70 und erstreckt sich bis zum stromabwärts gelegenen Ende des zylindrischen Abschnitts 70. Die Wandung des zentralen Führungsrohrs 80 beginnt am stromaufwärts gelegenen Ende des zylindrischen Abschnitts 70 an der Innenwand des zylindrischen Abschnitts. In Strömungsrichtung gesehen verringert sich der freie Querschnitt des zentralen Führungsrohrs 80. Diese Verjüngung erfolgt allmählich, und in der Schnittansicht der Fig. 16 ist die Wand des zentralen Führungsrohrs 80 zur Mittellängsachse hin gekrümmt. Am stromabwärts gelegenen Ende des zylindrischen Abschnitts 70 ist die Wand des zentralen Führungsrohrs 80 dann aber parallel zur Mittellängsachse ausgerichtet. Im Rahmen der Erfindung kann das Führungsrohr 80 auch mit einem sich verjüngenden Abschnitt enden.

Wie bereits ausgeführt wurde, vermischt sich das durch die Filterkappe 72 eingetretene Wasser erst stromabwärts der Strömungsleitflächen 82 und stromabwärts des zentralen Führungsrohrs 80 mit dem Wasser, das durch die Eintrittsschlitze 74 im zylindrischen Abschnitt 70 eingetreten ist.

Es ist in der Ansicht der Fig. 16 gut zu erkennen, vgl. auch Fig. 13, dass die Strömungsleitflächen 82 mit den Innenseiten der Stege 62 verbunden sind und die Stege 62 dadurch stabilisieren. Auch beim Auftreten von Druckstößen muss nicht befürchtet werden, dass die Stege 62 nachgeben und gegebenenfalls sogar dauerhaft plastisch verformt werden.

Die Filterkappe 72 ist aufgrund ihrer gebogenen Form stabiler als die Stege 62, so dass in diesem Bereich in der Regel keine Verformung der Filterkappe 72 bei Druckstößen zu befürchten ist.

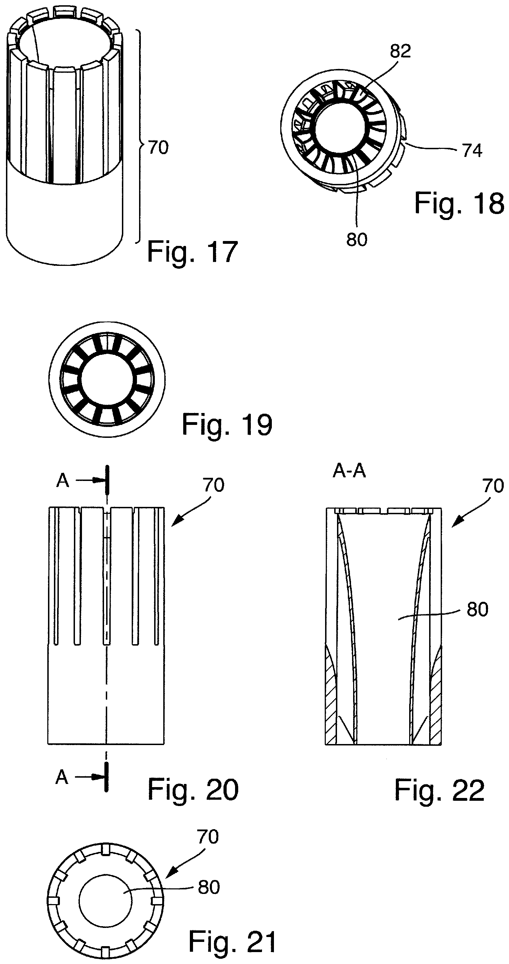

Die Darstellungen der Fig. 17 bis 21 zeigen verschiedene Ansichten des zylindrischen Abschnitts 70 des Eintrittsfilters 68 der Fig. 11 bis 16. In diesen Ansichten ist beispielsweise die Anordnung der Strömungsleitflächen 82 im Verhältnis zu den Eintrittsschlitzen 74 deutlicher zu erkennen wie auch die Ausbildung des zentralen Führungsrohrs 80.

Zur Herstellung des Eintrittsfilters 68 wird der zylindrische Abschnitt 70 mit der Filterkappe 72 zusammengesetzt und dann beispielsweise gesintert.

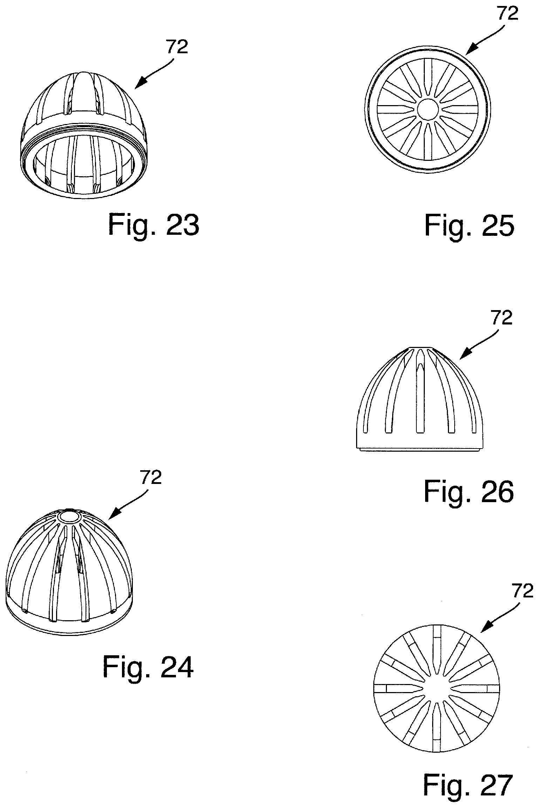

Die Filterkappe 72 des Eintrittsfilters 68 der Fig. 11 bis 15 ist in den Fig. 23 bis 27 aus verschiedenen Blickwinkeln dargestellt.

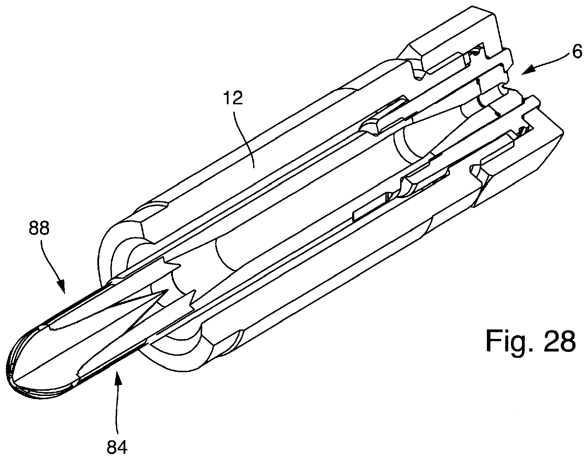

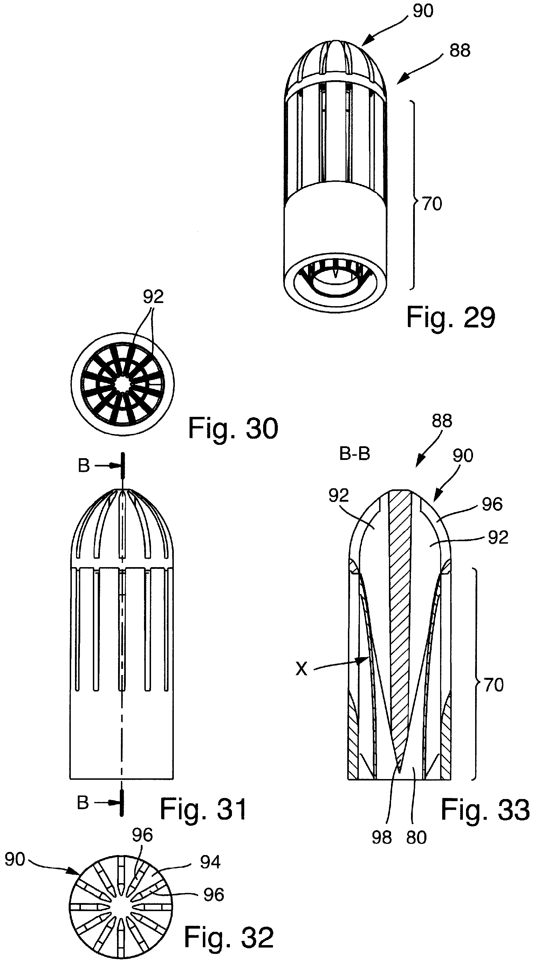

Die Darstellung der Fig. 28 zeigt eine schematische Schnittansicht einer erfindungsgemäßen Hochdruckdüseneinheit 84 gemäß einer weiteren Ausführungsform der Erfindung. Die Hochdruckdüseneinheit 84 ist wieder in den Anschweißnippel 12 eingebaut und weist die Düse 6 und eine Filter-Strahlrichtereinheit 88 auf. Die Hochdruckdüseneinheit 84 der Fig. 28 unterscheidet sich von der Hochdruckdüseneinheit 4 der Fig. 1 lediglich durch den Aufbau der Filter-Strahlrichtereinheit 88, die nun anhand der folgenden Fig. 29 bis 38 erläutert wird.

Die Darstellungen der Fig. 29 bis 32 zeigen die Filter-Strahlrichtereinheit 88 der Hochdruckdüseneinheit 84 der Fig. 28. Die Filter-Strahlrichtereinheit 88 weist den zylindrischen Abschnitt 70 auf, der gegenüber der Ausführungsform der Fig. 17 bis 21 nicht verändert ist und daher nicht erneut erläutert wird. Der zylindrische Abschnitt 70 ist mit einer Filterkappe 90 zusammengesetzt, die ihrerseits mit einem Strahlrichter und Strömungsleitflächen 92 versehen ist.

In der Schnittansicht der Fig. 33 ist zu erkennen, dass die Filterkappe 90 mehrere Strömungsleitflächen 92 aufweist, die in zur Mittellängsachse radialen Ebenen angeordnet sind. Die Strömungsleitflächen 92 sind mit der Innenseite von Stegen 94 der Filterkappe 90 verbunden, wobei die Stege 94 jeweils zwischen zwei Eintrittsschlitzen 96 der Filterkappe 90 angeordnet sind. Die Schlitze 96 sind in gleicher Weise angeordnet wie die Schlitze 76 der Filterkappe 72 in den Fig. 11 bis 15 und 23 bis 27. Die Filterkappe 90 der Fig. 29 bis 32 unterscheidet sich von der Filterkappe 72 lediglich durch das Vorsehen der Strömungsleitflächen 92. Wie Fig. 32 zu entnehmen ist, sind insgesamt zwölf Eintrittsschlitze 96 in der Filterkappe 90 vorgesehen und, wie Fig. 31 zu entnehmen ist, ebenfalls zwölf in zur Mittellängsachse radialen Ebenen angeordnete Strömungsleitflächen 92. Jedem der Eintrittsschlitze 96 ist dadurch ein separater Teilströmungskanal zugeordnet, der zwischen zwei benachbarten Strömungsleitflächen 92 verläuft. Die Teilströmungskanäle haben jeweils einen dreieckartigen Querschnitt. Wie ausgeführt wurde kann die Anzahl der Eintrittsschlitze 96 variieren und muss nicht gleich sein zur Anzahl der Eintrittsschlitze in Abschnitt 70.

Die Strömungsleitflächen 92 sind mit ihren radial innenliegenden Kanten miteinander verbunden. Dadurch wird zum einen eine äußerst stabile Anordnung erreicht, zum anderen sind die zwischen den Strömungsleitflächen 92 gebildeten Teilströmungskanäle auch strikt voneinander getrennt.

Die Strömungsleitflächen 92 verringern ihre Fläche in Strömungsrichtung gesehen, in Fig. 33 also von oben nach unten. Die Form der Strömungsleitflächen 92 ist dabei so gewählt, dass die Filterkappe 90 in das zentrale Führungsrohr 80 des zylindrischen Abschnitts 70 eingesteckt werden kann. Bis zum Punkt X und damit etwa über die Länge des ersten Drittels des zentralen Führungsrohrs 80 liegen die Strömungsleitflächen 92 mit ihrer radial außenliegenden Kante noch an der Innenwand des zentralen Führungsrohrs 80 an. Der Punkt X liegt erfindungsgemäß bei maximal 80% der Länge des zentralen Führungsrohrs 80. Danach verjüngen sich die Strömungsleitflächen 92 so stark, dass ihre radial außenliegenden Kanten einen Abstand von der Wand des zentralen Führungsrohrs 80 aufweisen. Dieser Abstand erhöht sich bis zum Ende der Strömungsleitflächen 92 allmählich. Infolgedessen erfolgt auch eine nur allmähliche Vermischung des Wassers aus den einzelnen Teilströmungskanälen zwischen jeweils zwei Strömungsleitflächen 92.

Die Strömungsleitflächen 92 sorgen für eine Ausrichtung des Wassers, das durch die Schlitze 96 in der Filterkappe 90 eintritt, parallel zur Mittellängsachse des Eintrittsfilters 88. Am Ende des zentralen Führungsrohrs 80, das mit dem Ende der Filter-Strahlrichtereinheit 88 zusammenfällt, ist das Wasser im zentralen Führungsrohr 80 dadurch im Wesentlichen parallel zur Mittellängsachse ausgerichtet. Das Wasser trifft dann, wie bereits erläutert wurde, auf das ebenfalls parallel zur Mittellängsachse ausgerichtete Wasser in den Teilströmungskanälen zwischen den Strömungsleitflächen 82. Dadurch werden Turbulenzen beim Vermischen der Strömungen verringert oder vermieden und insgesamt kann mit der Filter-Strahlrichtereinheit 88 ein geringerer Widerstand erzielt werden als mit konventionellen Eintrittsfiltern und Strahlrichtern. Ein Impact eines Sprühstrahls, der aus der erfindungsgemäßen Hochdruckdüseneinheit 84 austritt, wird gegenüber konventionellen Hochdruckdüsen erhöht.

Die Strömungsleitflächen 92 laufen, wie erwähnt wurde, in einer gemeinsamen Spitze 98 aus. Das Ende der Spitze 98 befindet sich vor dem Ende des zentralen Führungsrohrs 80. Die Spitze 98 kann im Rahmen der Erfindung auch abgerundet sein und/oder auch in Längsrichtung vor, auf Höhe oder nach dem Ende des Führungsrohrs 80 angeordnet sein.

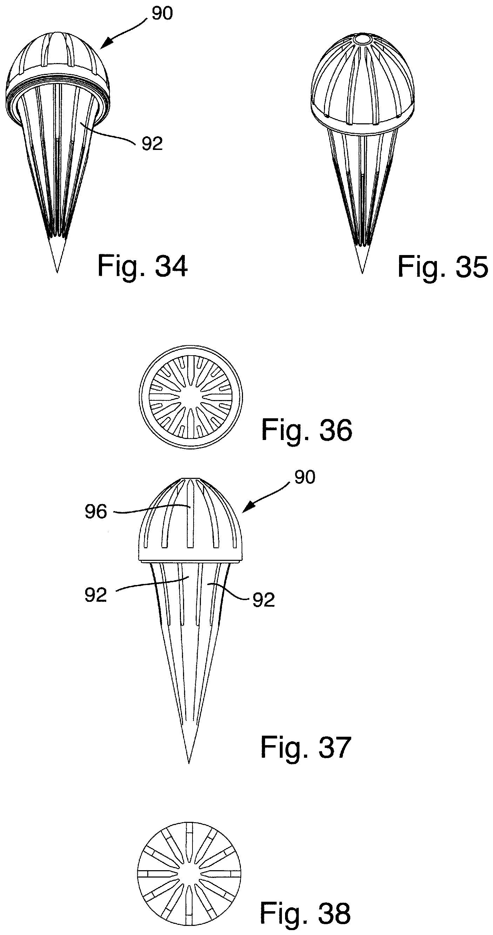

Die Fig. 34 bis 38 zeigen die Filterkappe 90 des Eintrittsfilters 88 der Fig. 30 bis 34 ohne den zylindrischen Abschnitt 70. In den verschiedenen Ansichten ist die Anordnung der Strömungsleitflächen 92 gut zu erkennen. Gut zu erkennen ist auch, dass jedem Eintrittsschlitz 96 in der Filterkappe 90 ein separater Teilströmungskanal zwischen zwei Strömungsleitflächen 92 zugeordnet ist. Im Rahmen der Erfindung können auch mehrere Eintrittsschlitze 96 einem Teilströmungskanal zugeordnet sein.

Der zylindrische Abschnitt 70 und die Filterkappen 72, 90 werden jeweils getrennt mittels Metallpulverspritzgießen hergestellt. Hierbei wird in bekannter Weise zunächst Metallpulver mit einem thermoplastischen Kunststoffbinder vermischt. Als Metallpulver kann beispielsweise auch Hartmetallpulver verwendet werden. Die so erhaltene Mischung wird auch als Feedstock bezeichnet. In einem zweiten Schritt wird die so erhaltene Mischung dann mittels Spritzgießen in Form gebracht und speziell werden der zylindrische Abschnitt 70 und die Filterkappe 72, 90 separat hergestellt. Verwendet werden können im Wesentlichen herkömmliche Spritzgießmaschinen, da die Mischung ja aufgrund des thermoplastischen Kunststoffbinders kunststoffähnliche Eigenschaften aufweist und für das Spritzgießen geeignet ist. Das nach dem Spritzgießen erhaltene Vorprodukt wird als Grünling oder Green Component bezeichnet.

Ein darauffolgender Schritt wird als Entbindern bezeichnet und im Verlauf dieses Schritts wird der thermoplastische Kunststoffbinder durch geeignete Prozesse aus dem Vorprodukt entfernt. Dies können beispielsweise thermische oder chemische Prozesse sein. Nach dem Entbindern liegt ein Vorprodukt mit einer vergleichsweise porösen Struktur vor, in dem zwischen den einzelnen Metallpulverteilchen Zwischenräume vorhanden sind, die ursprünglich durch den thermoplastischen Kunststoffbinder ausgefüllt waren. Das nach dem Entbindern erhaltene Vorprodukt wird auch als Bräunling oder Brown Component bezeichnet.

Nach dem Entbindern können Einzelteile zusammengebaut werden. Im vorliegenden Fall werden dann der zylindrische Abschnitt 70 und die Filterkappe 72 oder die Filterkappe 90 zusammengesetzt.

Im zusammengebauten Zustand der Vorprodukte werden diese dann gesintert. Das Sintern erfolgt durch einen Wärmebehandlungsprozess. Nach dem Sintern sind die Materialeigenschaften des entstandenen Endprodukts vergleichbar mit denen massiver Materialien. Die zusammengebauten Einzelteile, speziell die Filterkappe 72 oder die Filterkappe 90 und der zylindrische Abschnitt 70, können durch den Schritt des Sinterns unlösbar miteinander verbunden werden und eventuell vorhandene Trennfugen zwischen den Einzelteilen verschwinden dabei.

Alternativ können die Filterkappe 72, die Filterkappe 90 und der zylindrische Abschnitt 70 auch separat hergestellt und gesintert werden. Die Verbindung dieser Bauteile erfolgt dann beispielsweise durch Schweißen, insbesondere Laserschweißen oder Löten.

Falls erforderlich, können die miteinander verbundenen Einzelteile noch nachbearbeitet oder oberflächenbehandelt werden, beispielsweise strichpoliert, um den Strömungswiderstand noch weiter herabzusetzen.

Der mittels Metallpulverspritzgießen hergestellte Eintrittsfilter kann strömungsgünstig und gleichzeitig hochfest gestaltet werden. Zu der gegenüber konventionellen Eintrittsfiltern erhöhten Festigkeit trägt ganz speziell die Anordnung der Strömungsleitflächen im Bereich des Eintrittsfilters und die Abstützung der Stege zwischen den Eintrittsschlitzen durch die Strömungsleitflächen bei. Gleichzeitig kann durch frühzeitiges Ausrichten des in den Eintrittsfilter eintretenden Wassers über die Strömungsleitflächen ein verringerter Strömungswiderstand erreicht werden, da sich die Strömungsleitflächen des Strahlrichters bis in den Bereich des Eintrittsfilters erstrecken. Dies führt in der Folge zu einem verbesserten Impact einer mit dem Eintrittsfilter ausgestatteten erfindungsgemäßen Hochdruckdüse.

Alternativ kann die erfindungsgemäße Filter-Strahlrichtereinheit beispielsweise mittels Druckguss oder selektivem Laserschmelzen hergestellt werden.

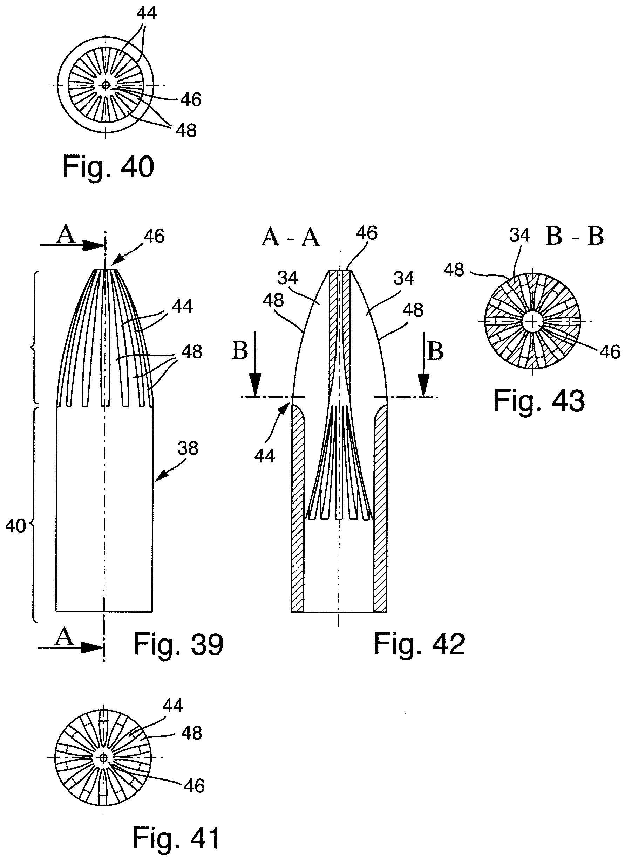

Die Darstellung der Fig. 39 zeigt eine Filter-Strahlrichtereinheit 38, die anstelle der Filter-Strahlrichtereinheit 18 bei der Hochdrückdüseneinheit 4 der Fig. 1 eingesetzt werden kann. Die Filter-Strahlrichtereinheit 38 weist einen zylindrischen Rohrabschnitt 40 und eine etwa domförmige Filterkappe 42 auf. Am in Fig. 39 unteren Ende des zylindrischen Rohrabschnitts 40 ist das Anschlussende zur Verbindung mit der Düse angeordnet. Die Filterkappe 42 ist mit mehreren Eintrittsschlitzen 44 versehen, die annähernd über die gesamte Länge der Filterkappe 42 laufen und an der Kuppe der Filterkappe an einem zentralen Rohr 46 enden. Die Schlitze 44 erstrecken sich infolgedessen von der Wandung des zentralen Rohrs 46 bis zu der zylindrischen Wandung des Zylinderabschnitts 40. Die Schlitze 44 sind durch Stege 48 voneinander getrennt. Von den Innenseiten der Stege 48 bis zur Außenwand des zentralen Rohrs 46 erstrecken sich Strömungsleitflächen 34. Die Strömungsleitflächen 34 sind mit den Innenseiten der Stege 48 verbunden, siehe auch Fig. 42. Das zentrale Rohr 46 erstreckt sich bis kurz vor das stromabwärts gelegene Ende der Schlitze 44 und endet damit noch bevor der zylindrische Abschnitt 40 der Filter-Strahlrichtereinheit 38 beginnt. Die Strömungsleitflächen 34 erstrecken sich hingegen in den zylindrischen Abschnitt 40 des Eintrittsfilters 38 hinein, wobei sich die Fläche der Strömungsleitflächen 34 aber in Strömungsrichtung, in Fig. 39 und 42 also von oben nach unten, allmählich verringert. Die Strömungsleitflächen 34 enden vor dem Ende des zylindrischen Abschnitts 40. Die Verjüngung der Strömungsleitflächen 34 und die sich dadurch ergebende Verringerung der Fläche in Strömungsrichtung wird durch eine geschwungene gekrümmte Kontur der radial innenliegenden Kante der Strömungsleitflächen 34 in dem Abschnitt stromabwärts des zentralen Rohrs 46 erreicht. Die radial innenliegenden Kanten der Strömungsleitflächen 34 laufen dadurch stetig auseinander, um dann letztendlich in die Innenwand des zylindrischen Abschnitts 40 zu münden. Das zentrale Rohr 46 bildet einen Teilströmungskanal und zwischen jeweils zwei Strömungsleitflächen 34 ist jeweils ein weiterer Teilströmungskanal des Eintrittsfilters 38 ausgebildet.

Fig. 40 zeigt eine Ansicht der Filter-Strahlrichtereinheit 38 der Fig. 39 von oben und Fig. 41 von unten.

Die Darstellung der Fig. 42 zeigt eine Ansicht auf die Schnittebene A-A in Fig. 39. Zu erkennen sind die Strömungsleitflächen 34, die jeweils von den Innenseiten der Stege 48 ausgehen. Zwischen zwei Stegen 48 ist jeweils ein Schlitz 44 angeordnet. Es ist weiter zu erkennen, dass die Strömungsleitflächen 34 bis zu dem zentralen Rohr 46 laufen und mit ihren radial innenliegenden Kanten mit der Außenwand des zentralen Rohrs 46 verbunden sind.

Fig. 43 zeigt eine Ansicht auf die Schnittebene B-B in Fig. 42. Die Strömungsleitflächen 34 nehmen auf der Innenseite der Stege 48 die vollständige Breite der Stege 48 ein und verringern dann ihre Breite in Richtung auf das zentrale Rohr 46. Innerhalb des zentralen Rohrs 46 ist ebenfalls ein Teilströmungskanal gebildet, durch den Wasser in den die Mittellängsachse des Eintrittsfilters 38 unmittelbar umgebenden Bereich eintreten kann.

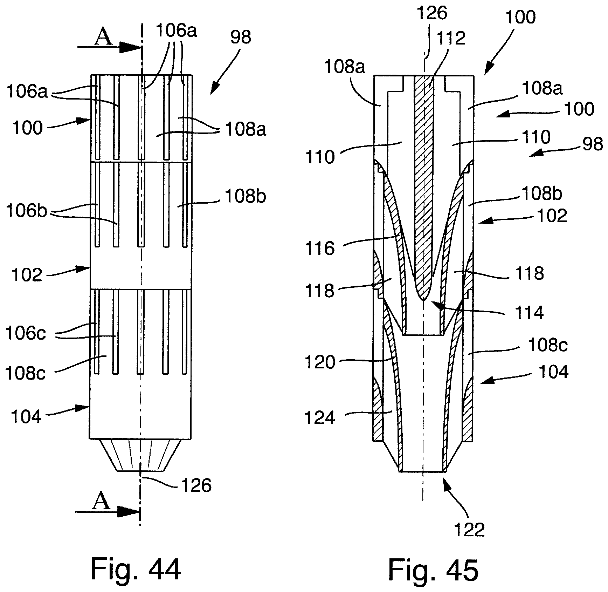

Die Darstellung der Fig. 44 zeigt eine Filter-Strahlrichtereinheit 98 gemäß einer weiteren Ausführungsform der Erfindung. Die Filter-Strahlrichtereinheit 98 weist insgesamt drei Abschnitte 100, 102, 104 auf, die als separate Bauteile hergestellt und miteinander verbunden sind, beispielsweise durch Zusammensintern, Löten oder auch Schweißen. Jeder der Abschnitte 100, 102, 104 weist Teile des Eintrittsfilters und Teile des Strahlrichters auf. So weist der am stromaufwärts gelegenen Ende angeordnete Abschnitt 100 eine zylindrische Form mit ebener Stirnfläche und mehrere, in radialer Richtung angeordnete Eintrittsschlitze 106a auf. Die Eintrittsschlitze 106a erstrecken sich parallel zur Mittellängsachse 126 entlang der zylindrischen Umfangswand und auch in die ebene Stirnfläche des Abschnitts 100 hinein. Zwischen den Eintrittsschlitzen 106a sind jeweils Stege 108a angeordnet. Die Lage und Ausbildung der Stege 108a ist auch in der Schnittansicht der Fig. 45 auf die Schnittebene A-A in Fig. 44 zu erkennen. Von einer Innenseite der Stege 108a gehen Strömungsleitflächen 110 aus. Die Strömungsleitflächen 110 laufen in der Mitte des Abschnitts 100 zusammen und bilden dort infolgedessen einen stabförmiges Zentralelement 112. Das stabförmige Zentralelement 112 geht von der ebenen Stirnseite des Abschnitts 100 aus und erstreckt sich über die zylindrische Umfangswand hinaus. Die Strömungsleitflächen 110 verjüngen sich ab dem Ende der zylindrischen Umfangswand in Strömungsrichtung. Die Strömungsleitflächen 110 verringern ihre Fläche allmählich bis auf null, wobei dies kurz vor einem Ende 114 des Zentralbauteils 112 der Fall ist. Das Ende 114 des Zentralbauteils 112 ist als abgerundete Spitze ausgeführt. Das Zentralelement 112 und die Strömungsleitflächen 110 erstrecken sich in den zweiten Abschnitt 102 hinein.

Auch der zweite Abschnitt 102 ist mit über seinen Umfang verteilten Eintrittsschlitzen 106b versehen. Die Eintrittsschlitze 106b im zweiten Abschnitt 102 fluchten in Längsrichtung der Filter-Strahlrichtereinheit 98 gesehen mit den Eintrittsschlitzen 106a des ersten Abschnitts 100, sie können demgegenüber im Rahmen der Erfindung aber auch eine unterschiedliche Anzahl aufweisen und/oder demgegenüber versetzt sein. Der zweite Abschnitt 102 ist mit einer zylindrischen Umfangswand versehen, in der die Schlitze 106b ausgebildet sind. Der zweite Abschnitt 102 weist darüber hinaus ein Zentralrohr 116 auf, siehe Fig. 45, das sich in Strömungsrichtung verjüngt und in das sich das Zentralelement 112 und die Strömungsleitflächen 110 des ersten Abschnitts 100 hineinerstrecken. Von einer Außenwand des Zentralrohrs 116 gehen Strömungsleitflächen 118 aus, die, ähnlich wie bei der Ausführungsform der Fig. 14 und 16, mehrere Teilströmungskanäle bilden. Speziell ist bei der dargestellten Ausführungsform jedem Eintrittsschlitz 106b im zweiten Abschnitt 102 ein Teilströmungskanal zwischen zwei Strömungsleitflächen 118 zugeordnet. Wie bereits ausgeführt wurde, kann die Zuordnung der Eintrittsschlitze 106b zu den Teilströmungskanälen unterschiedlich sein und beispielsweise können zwei oder drei Eintrittsschlitze 106b einem Teilströmungskanal zugeordnet sein. Das Zentralelement 112 erstreckt sich so weit in das Zentralrohr 116 des zweiten Abschnitts 102 hinein, dass das Ende 114 des Zentralelements 112 etwa auf Höhe des Endes der zylindrischen Umfangswand des zweiten Abschnitts 102 angeordnet ist. Das Zentralrohr 116 erstreckt sich über das Ende 114 des Zentralelements 112 und über das Ende der zylindrischen Umfangswand des zweiten Abschnitts 102 hinaus und ragt in ein Zentralrohr 120 des dritten Abschnitts 104 hinein.

Der dritte Abschnitt 104 ist ähnlich aufgebaut wie der zweite Abschnitt 102 und lediglich geringfügig länger. Das Zentralrohr 120 verjüngt sich in Strömungsrichtung und bildet dann an seinem stromabwärts gelegenen Ende 122 das stromabwärts gelegene Ende der Filter-Strahlrichtereinheit 98. Der dritte Abschnitt 104 weist eine zylindrische Umfangswand auf, in der mehrere Eintrittsschlitze 106c angeordnet sind. Die Eintrittsschlitze 106c fluchten mit den Eintrittsschlitzen 106a, 106b des ersten Abschnitts 100 und des zweiten Abschnitts 102, wobei, wie ausgeführt wurde, die Eintrittsschlitze 106c des dritten Abschnitts 104 gegenüber den Eintrittsschlitzen 1061, 106b der Abschnitte 100, 102 versetzt sein können oder auch in unterschiedlicher Anzahl vorhanden sein können. Die Eintrittsschlitze 106a, 106b, 106c der unterschiedlichen Abschnitte 100, 102, 104 münden in unterschiedliche Teilströmungskanäle. So sind auch bei dem dritten Abschnitt 104 zwischen den Stegen 108c, die die Eintrittsschlitze 106c voneinander trennen, und der Außenwand des Zentralrohrs 120 Strömungsleitflächen 124 angeordnet. Zwischen zwei Strömungsleitflächen 124 ist dann jeweils ein Teilströmungskanal angeordnet. Insofern ist der dritte Abschnitt, wie ausgeführt wurde, prinzipiell gleich zum zweiten Abschnitt 102 aufgebaut und unterscheidet sich lediglich in seiner Länge.

Es ist in der Schnittansicht der Fig. 45 auch zu erkennen, dass die jeweils stromabwärts liegenden Berandungen der Eintrittsschlitze 106a, 106b, 106c in allen drei Abschnitten 100, 102, 104 abgerundet und im Wesentlichen parallel zur Kontur der Zentralrohre 116, 120 ausgeführt sind. Auch dies vermeidet die Entstehung von Turbulenzen.

Die Filter-Strahlrichtereinheit 98 weist erkennbar einen modularen Aufbau auf. Beispielsweise könnte eine Filter-Strahlrichtereinheit lediglich mittels des ersten Abschnitts 100 und des zweiten Abschnitts 102 oder mittels des ersten Abschnitts 100 und des dritten Abschnitts 104 gebildet werden. Gleichfalls wäre es möglich, beispielsweise den ersten Abschnitt 100 mit zwei aufeinanderfolgenden Abschnitten 102 und dann noch dem dritten Abschnitt 104 zu versehen, wenn eine längere Filter-Strahlrichtereinheit erforderlich ist. Wesentlich ist dabei, dass von den Eintrittsschlitzen 106a des ersten Abschnitts 100, der immer das stromaufwärts gelegene Ende der Filter-Strahlrichtereinheit 98 bildet, Teilströmungskanäle ausgehen, die in das Zentralrohr 116 des zweiten Abschnitts 102 beziehungsweise des nachfolgenden Abschnitts münden. Das Zentralrohr 116 des zweiten Abschnitts 102 mündet dann wieder koaxial in das Zentralrohr 120 des dritten Abschnitts 104 beziehungsweise des nachfolgenden Abschnitts. Um das Zentralrohr 116, 120 des zweiten Abschnitts 102 bzw. des dritten Abschnitts 104 herum münden Teilströmungskanäle, die zwischen jeweils zwei Strömungsleitflächen 118 bzw. 124, die von den Eintrittsschlitzen 106b, 106c des zweiten Abschnitts 102 bzw. des dritten Abschnitts 104 ausgehen, gebildet sind. Das in die Filter-Strahlrichtereinheit 98 durch die Eintrittsschlitze 106a, 106b, 106c in den drei Abschnitten 100, 102, 104 einströmende Wasser wird dadurch vergleichsweise turbulenzarm parallel zur Mittellängsachse 126 der Filter-Strahlrichtereinheit 98 ausgerichtet und dann weiter zur Düse geführt. Die Filter-Strahlrichtereinheit 98 kann dadurch für geringere Strömungsverluste und einen höheren Impact der Düse sorgen.

## Patentansprüche

1. Filter-Strahlrichtereinheit, insbesondere für eine Hochdruckdüse (10), insbesondere zum Entzundern von Metallerzeugnissen, mit einem Gehäuse, wobei das Gehäuse einen Eintrittsfilter (18; 38; 68; 88), ein Anschlussende zur Verbindung mit einer Düse, einen Strömungskanal zwischen dem Eintrittsfilter (18; 38; 68; 88) und dem Anschlussende und einen Strahlrichter mit Strömungsleitflächen (34; 50; 82; 92) im Strömungskanal aufweist, wobei die Strömungsleitflächen (34; 50; 82; 92) des Strahlrichters wenigstens abschnittsweise im Bereich des Eintrittsfilters (18; 38; 68; 88) angeordnet sind, **dadurch gekennzeichnet, dass** die Strömungsleitflächen (34; 50; 82; 92) an ihrer radial innen liegenden Seite wenigstens abschnittsweise miteinander oder mit einem zentralen Verbindungselement des Strahlrichters verbunden sind.

2. Filter-Strahlrichtereinheit nach Anspruch 1, **dadurch gekennzeichnet, dass** der Eintrittsfilter (18; 38; 68; 88) mehrere, parallel zur Mittellängsachse des Strömungskanals angeordnete Eintrittsschlitze (44; 56; 74) aufweist, wobei die Eintrittsschlitze (44; 56; 74) mittels mehrerer in Umfangsrichtung des Gehäuses gesehen nebeneinander angeordnete Stege (48; 62) voneinander getrennt sind, wobei die Strömungsleitflächen (50; 82) des Strahlrichters wenigstens teilweise mit den Innenseiten der Stege (48; 62) verbunden sind, die einem Innenraum des Gehäuses zugewandt sind.

3. Filter-Strahlrichtereinheit nach Anspruch 1 oder 2, **dadurch gekennzeichnet, dass** die Strömungsleitflächen (50) lediglich über einen Teil der Länge des Strahlrichters an ihrer radial innen liegenden Kante miteinander verbunden sind oder sich das zentrale Verbindungselement lediglich über einen Teil der Länge des Strahlrichters erstreckt und dass sich die Strömungsleitflächen (50) am stromabwärts gelegenen Ende des Strahlrichters an ihren radial innenliegenden Kanten nicht berühren.

4. Filter-Strahlrichtereinheit nach Anspruch 1, 2 oder 3, **dadurch gekennzeichnet, dass** das zentrale Verbindungselement rohrförmig ausgebildet ist und einen zentralen Teilströmungskanal (80) des Strahlrichters bildet.

5. Filter-Strahlrichtereinheit nach wenigstens einem der vorstehenden Ansprüche, **dadurch gekennzeichnet, dass** der Eintrittsfilter (18; 68; 88) mehrere an einer zylindrischen Umfangswand des Gehäuses angeordnete Eintrittsschlitze (56; 74) aufweist und dass ausgehend von diesen Eintrittsschlitzen (56; 74) mehrere voneinander getrennte äußere Teilströmungskanäle im Strahlrichter vorgesehen sind.

6. Filter-Strahlrichtereinheit nach Anspruch 5, **dadurch gekennzeichnet, dass** ein zentraler Teilströmungskanal des Strahlrichters und mehrere, den zentralen Teilströmungskanal umgebende äußere Teilströmungskanäle vorgesehen sind.

7. Filter-Strahlrichtereinheit nach Anspruch 6, **dadurch gekennzeichnet, dass** am stromaufwärts gelegenen Ende des zentralen Teilströmungskanals eine Filterkappe (72; 90) des Eintrittsfilters (68; 88) angeordnet ist.

8. Filter-Strahlrichtereinheit nach Anspruch 7, **dadurch gekennzeichnet, dass** die Filterkappe (90) mehrere Eintrittsschlitze (96) aufweist, wobei von zwischen den Eintrittsschlitzen (96) angeordneten Stegen (94) wenigstens teilweise Strömungsleitflächen (92) des Strahlrichters ausgehen.

9. Filter-Strahlrichtereinheit nach Anspruch 7, **dadurch gekennzeichnet, dass** sich eine Fläche der Strömungsleitflächen (92) in Strömungsrichtung verringert und die Strömungsleitflächen (92) am stromabwärts gelegenen Ende des Strahlrichters an einer gemeinsamen Spitze (98) enden.

10. Filter-Strahlrichtereinheit nach Anspruch 8 oder 9, **dadurch gekennzeichnet, dass** die Filterkappe (90) und der durch die Strömungsleitflächen (92) gebildete Strahlrichter einstückig ausgebildet sind.

11. Filter-Strahlrichtereinheit nach wenigstens einem der vorstehenden Ansprüche, **gekennzeichnet durch** einen modularen Aufbau aus mehreren miteinander verbundenen Abschnitten (100, 102, 104), wobei jeder Abschnitt (100, 102, 104) Eintrittsschlitze (106) und Strömungsleitflächen (110, 118, 124) aufweist.

12. Filter-Strahlrichtereinheit nach Anspruch 11, **dadurch gekennzeichnet, dass** in jedem Abschnitt (100, 102, 104) von den Eintrittsschlitzen (106) separate Teilströmungskanäle ausgehen, die jeweils zwischen zwei Strömungsleitflächen (110, 118, 124) gebildet sind.

13. Hochdruckdüseneinheit, insbesondere zum Entzundern von Metallerzeugnissen, mit einer Filter-Strahlrichtereinheit nach wenigstens einem der vorstehenden Ansprüche, wobei eine mit dem Anschlussende der Filter-Strahlrichtereinheit verbundenen Düse mit einer Austrittsöffnung (22) vorgesehen ist.

14. Hochdruckdüseneinheit nach Anspruch 13, **dadurch gekennzeichnet, dass** ein Düsenmundstück der Düse aus Hartmetall hergestellt ist.

## Claims

1. Filter jet-director unit, in particular for a high-pressure nozzle (10), in particular for descaling metal products, having a housing, wherein the housing has an entry filter (18; 38; 68; 88), a connector end for connecting to a nozzle, a flow duct between the entry filter (18; 38; 68; 88) and the connector end, and a jet director having flow-guiding faces (34; 50; 82; 92) in the flow duct, wherein the flow-guiding faces (34; 50; 82; 92) of the flow director at least in portions are disposed in the region of the entry filter (18; 38; 68; 88), **characterized in that** the flow-guiding faces (34; 50; 82; 92) on the radially inward side thereof, at least in portions, are interconnected or connected to a central connection element of the jet director.

2. Filter jet-director unit according to claim 1, **characterized in that** the entry filter (18; 38; 68; 88) has a plurality of entry slots (44; 56; 74) which are disposed so as to be parallel with the central longitudinal axis of the flow duct, wherein the entry slots (44; 56; 74) are mutually separated by means of a plurality of webs (48; 62) which, when viewed in the circumferential direction of the housing, are disposed side-by-side of each other, wherein the flow-guiding faces (50; 82) of the jet director at least in part are connected to the internal sides of those webs (48; 62) that face an interior of the housing.

3. Filter jet-director unit according to claim 1 or 2, **characterized in that** the flow-guiding faces (50) are interconnected on the radially inward edge thereof only across part of the length of the jet director, or that the central connection element extends only across part of the length of the jet director, and **in that** the flow-guiding faces (50) on the radially inward edges thereof do not touch one another at the downstream end of the jet director.

4. Filter jet-director unit according to claim 1, 2 or 3, **characterized in that** the central connection element is configured so as to be tubular and forms a central partial-flow duct (80) of the jet director.

5. Filter jet-director unit according to at least one of the preceding claims, **characterized in that** the entry filter (18; 68; 88) has a plurality of entry slots (56; 74) that are disposed on a cylindrical circumferential wall of the housing, and **in that**, proceeding from these entry slots (56; 74), a plurality of mutually separated external partial-flow ducts are provided in the jet director.

6. Filter jet-director unit according to claim 5, **characterized in that** one central partial-flow duct of the jet director and a plurality of external partial-flow ducts that surround the central partial-flow duct are provided.

7. Filter jet-director unit according to claim 6, **characterized in that** a filter cap (72; 90) of the entry filter (68; 88) is disposed at the upstream end of the central partial-flow duct.

8. Filter jet-director unit according to claim 7, **characterized in that** the filter cap (90) has a plurality of entry slots (96), wherein at least partial flow-guiding faces (92) of the jet director emanate from webs (94) that are disposed between the entry slots (96).

9. Filter jet-director unit according to claim 7, **characterized in that** a surface area of the flow-guiding faces (92) decreases in the flow direction, and the flow-guiding faces (92) at the downstream end of the jet director terminate on a common tip (98).

10. Filter jet-director unit according to claim 8 or 9, **characterized in that** the filter cap (90) and the jet director that is formed by the flow-guiding faces (92) are configured so as to be integral.

11. Filter jet-director unit according to at least one of the preceding claims, **characterized by** a modular construction from a plurality of interconnected portions (100, 102, 104), wherein each portion (100, 102, 104) has entry slots (106) and flow-guiding faces (110, 118, 124).

12. Filter jet-director unit according to claim 11, **characterized in that** separate partial-flow ducts which are in each case formed between two flow-guiding faces (110, 118 124) emanate from the entry slots (106) in each portion (100, 102, 104).

13. High-pressure nozzle unit, in particular for descaling metal products, having a filter jet-director unit according to at least one of the preceding claims, wherein a nozzle, having an exit opening (22) and being connected to the connector end of the filter jet-director unit, is provided.

14. High-pressure nozzle unit according to claim 13, **characterized in that** a nozzle mouthpiece of the nozzle is made from hard metal.

## Revendications

1. Unité de redresseur de jet à filtre, en particulier pour une buse haute pression (10), en particulier pour décalaminer des produits métalliques, comprenant un boîtier, le boîtier comprenant un filtre d'entrée (18 ; 38 ; 68 ; 88), une extrémité de raccordement pour la liaison à une buse, un canal d'écoulement entre le filtre d'entrée (18 ; 38 ; 68 ; 88) et l'extrémité de raccordement et un redresseur de jet doté de surfaces de guidage d'écoulement (34 ; 50 ; 82 ; 92) dans le canal d'écoulement, les surfaces de guidage d'écoulement (34 ; 50 ; 82 ; 92) du redresseur de jet étant disposées au moins dans certaines zones dans la région du filtre d'entrée (18 ; 38 ; 68 ; 88), **caractérisée en ce que** les surfaces de guidage d'écoulement (34 ; 50 ; 82 ; 92) sont, sur leur côté situé radialement à l'intérieur, reliées au moins dans certaines zones les unes aux autres ou à un élément de liaison central du redresseur de jet.

2. Unité de redresseur de jet à filtre selon la revendication 1, **caractérisée en ce que** le filtre d'entrée (18 ; 38 ; 68 ; 88) comprend plusieurs fentes d'entrée (44 ; 56 ; 74) disposées parallèlement à l'axe longitudinal médian du canal d'écoulement, les fentes d'entrée (44 ; 56 ; 74) étant séparées les unes des autres au moyen de plusieurs nervures (48 ; 62) juxtaposées vues dans la direction périphérique du boîtier, les surfaces de guidage d'écoulement (50 ; 82) du redresseur de jet étant reliées au moins partiellement aux côtés intérieurs des nervures (48 ; 62) qui sont tournés vers un espace intérieur du boîtier.

3. Unité de redresseur de jet à filtre selon la revendication 1 ou 2, **caractérisée en ce que** les surfaces de guidage d'écoulement (50) sont reliées les unes aux autres seulement sur une partie de la longueur du redresseur de jet au niveau de leur arête située radialement à l'intérieur ou l'élément de liaison central s'étend seulement sur une partie de la longueur du redresseur de jet et **en ce que** les surfaces de guidage d'écoulement (50) ne sont pas en contact à l'extrémité située en aval du redresseur de jet au niveau de leurs arêtes radialement intérieures.

4. Unité de redresseur de jet à filtre selon la revendication 1, 2 ou 3, **caractérisée en ce que** l'élément de liaison central est réalisé de manière tubulaire et forme un canal d'écoulement partiel central (80) du redresseur de jet.

5. Unité de redresseur de jet à filtre selon au moins l'une des revendications précédentes, **caractérisée en ce que** le filtre d'entrée (18 ; 68 ; 88) comprend plusieurs fentes d'entrée (56 ; 74) disposées sur une paroi périphérique cylindrique du boîtier et **en ce que** plusieurs canaux d'écoulement partiels extérieurs séparés les uns des autres sont prévus dans le redresseur de jet à partir de ces fentes d'entrée (56 ; 74).

6. Unité de redresseur de jet à filtre selon la revendication 5, **caractérisée en ce qu'**un canal d'écoulement partiel central du redresseur de jet et plusieurs canaux d'écoulement partiels extérieurs entourant le canal d'écoulement partiel central sont prévus.

7. Unité de redresseur de jet à filtre selon la revendication 6, **caractérisée en ce qu'**un couvercle de filtre (72 ; 90) du filtre d'entrée (68 ; 88) est disposé à l'extrémité située en amont du canal d'écoulement partiel central.

8. Unité de redresseur de jet à filtre selon la revendication 7, **caractérisée en ce que** le couvercle de filtre (90) comprend plusieurs fentes d'entrée (96), des surfaces de guidage d'écoulement (92) du redresseur de jet partant au moins partiellement de nervures (94) disposées entre les fentes d'entrée (96).

9. Unité de redresseur de jet à filtre selon la revendication 7, **caractérisée en ce qu'**une aire des surfaces de guidage d'écoulement (92) diminue dans le sens d'écoulement et les surfaces de guidage d'écoulement (92) se terminent en une pointe commune (98) à l'extrémité située en aval du redresseur de jet.

10. Unité de redresseur de jet à filtre selon la revendication 8 ou 9, **caractérisée en ce que** le couvercle de filtre (90) et le redresseur de jet formé par les surfaces de guidage d'écoulement (92) sont formés d'une seule pièce.

11. Unité de redresseur de jet à filtre selon au moins l'une des revendications précédentes, **caractérisée par** une structure modulaire constituée de plusieurs parties (100, 102, 104) reliées les unes aux autres, chaque partie (100, 102, 104) comprenant des fentes d'entrée (106) et des surfaces de guidage d'écoulement (110, 118, 124).

12. Unité de redresseur de jet à filtre selon la revendication 11, **caractérisée en ce que**, dans chaque partie (100, 102, 104), des canaux d'écoulement partiels séparés partent des fentes d'entrée (106), lesquels canaux sont formés respectivement entre deux surfaces de guidage d'écoulement (110, 118, 124).

13. Unité de buse haute pression, en particulier pour décalaminer des produits métalliques, comprenant une unité de redresseur de jet à filtre selon au moins l'une des revendications précédentes, une buse reliée à l'extrémité de raccordement de l'unité de redresseur de jet à filtre et dotée d'une ouverture de sortie (22) étant prévue.

14. Unité de buse haute pression selon la revendication 13, **caractérisée en ce qu'**un bec de la buse est fabriqué à partir de métal dur.
